(19)

Europäisches
Patentamt
European
Patent Office
Office européen
des brevets

(11) **EP 3 315 804 A1**

(12) **EUROPEAN PATENT APPLICATION**

(43) Date of publication:
**02.05.2018 Bulletin 2018/18**

(21) Application number: **16196073.7**

(22) Date of filing: **27.10.2016**

(51) Int Cl.:
*F16C 32/04* (2006.01)     *F16C 27/08* (2006.01)
*F03B 11/06* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Forsnetics AB**
**752 17 Uppsala (SE)**

(72) Inventors:
• **ABRAHAMSSON, Curt Johan David**
  **753 34 Uppsala (SE)**
• **PEREZ-LOYA, Jesus Jose**
  **752 17 Uppsala (SE)**
• **LUNDIN, Claes Urban**
  **756 46 Uppsala (SE)**

(74) Representative: **Kransell & Wennborg KB**
**P.O. Box 27834**
**115 93 Stockholm (SE)**

(54) **ARRANGEMENT WITH A MAGNETIC THRUST BEARING HAVING REPELLING PERMANENT MAGNETS FOR SUPPORTING A ROTATABLE BODY**

(57)     Arrangement (10) for supporting a rotatable body (12), the arrangement (10) comprising a magnetic thrust bearing (20) having a magnetic bearing rotor (22) and a magnetic bearing stator (24) arranged in a configuration such that an air gap (28) is defined between the magnetic bearing rotor (22) and the magnetic bearing stator (24), the magnetic bearing rotor (22) being arranged to rotate relative to a stationary structure (30) about a rotational axis (14); and a resilient support structure (32) for supporting the magnetic bearing stator (24) relative to the stationary structure (30) and for allowing the magnetic thrust bearing (20) to move along the rotational axis (14); wherein a stiffness of the resilient support structure (32) is lower than a stiffness of the magnetic thrust bearing (20) such that when the magnetic thrust bearing (20) moves along the rotational axis (14), the air gap (28) remains substantially constant.

Fig. 1

EP 3 315 804 A1

## Description

## Technical Field

The present disclosure generally relates to an arrangement for supporting a rotatable body. In particular, an arrangement for supporting a rotatable body comprising a magnetic thrust bearing, and a system comprising such arrangement, are provided.

## Background

Thrust bearings may be used to provide support to rotating devices such as rotating machines. They may for example give axial support to a generator-turbine shaft-line. Thrust bearings are thus normally subjected to high axial forces.

A thrust bearing comprises a rotating component, the rotor, and a static component, the stator. The stator typically supports the rotor, which is configured to rotate relative to the stator. Friction is thereby generated between these components. In order to reduce the friction between the rotor and the stator, there may be provided a friction-reducing means such as a fluid film e.g. an oil film, at the interface between the rotor and the stator. Friction losses are however substantial even in the presence of such friction-reducing means.

In order to further reduce the friction between the rotor and the stator of a thrust bearing, it has been developed a magnetic thrust bearing, which lifts the load applied to the thrust bearing with an electromagnet. Such magnetic thrust bearing comprises a rotor and an electromagnet which forms part of the stator, an example of which is disclosed in the publication entitled "Magnetic thrust bearing" by T. Nakata, published in the Fuji Denki Review, Vol. 4, No. 2 in 1958. The magnetic thrust bearing of this disclosure is particularly directed to vertical type water-wheel generators.

## Summary

In magnetic thrust bearings, the axial thrust is supported by forces from a magnetic field. The magnitude of these forces is largely dependent on the air gap, i.e. the distance between the rotor and the stator of the magnetic thrust bearing. If this air gap is too large, the magnetic forces are reduced and the magnets are not fully utilized. For a given geometry (and volume of magnetic material), the magnetic force of the thrust bearing increases as the air gap decreases. For this reason, a small air gap is desirable. On the other hand, if this air gap is too small, the rotor and stator risk to collide.

In some implementations, a rotatable body (e. g. fixed to the rotor) might move axially during operation. Such axial movements or oscillations are common in large rotating systems. There are many reasons for such axial movements depending on the implementation. The movements may be a consequence of external forces, triggered by the rotation itself and/or have other causes.

For example, in hydroelectric power plant implementations, the axial displacements of the rotatable body may vary over time due to the water flow. There are however other implementations where the rotatable body is subjected to high external axial forces. The axial movements may in some implementations even be larger than the optimal size of the air gap.

If the rotatable body is subjected to external axial forces that move the rotatable body axially, the air gap might be affected and change in size, in particular if the stiffness of the magnetic thrust bearing is low. There is thus a risk that the rotor and stator come in contact and become damaged and/or impair the support by the magnetic thrust bearing.

In case the problem of collision between the rotor and stator of the magnetic thrust bearing is solved by dimensioning the air gap large enough to avoid collision when the rotatable body is subjected to high external axial forces, the air gap will be too big when the external axial forces are absent or reduced. In this case, the magnets will not be fully utilized. Thus, there exists a problem with the above described conflicting properties of magnetic thrust bearings, i.e. a problem in that the magnetic forces are reduced if the air gap is too large and in that there is a collision risk between the rotor and stator if the air gap is too small.

One object of the present disclosure is to provide an arrangement for supporting a rotatable body having reduced frictional losses.

A further object of the present disclosure is to provide an arrangement for supporting a rotatable body, where an air gap in a magnetic thrust bearing can be made as small as possible to provide high magnetic forces, an effective use of the magnet material and/or a reduction of the magnet material.

A still further object of the present disclosure is to provide an arrangement for supporting a rotatable body having a reliable operation, in particular a passive arrangement.

According to one aspect, there is provided an arrangement for supporting a rotatable body, the arrangement comprising a magnetic thrust bearing having a magnetic bearing rotor and a magnetic bearing stator arranged in a configuration such that an air gap is defined between the magnetic bearing rotor and the magnetic bearing stator, the magnetic bearing rotor being arranged to rotate relative to a stationary structure about a rotational axis; and a resilient support structure for supporting the magnetic bearing stator relative to the stationary structure and for allowing the magnetic thrust bearing to move along the rotational axis; wherein a stiffness of the resilient support structure is lower than a stiffness of the magnetic thrust bearing such that when the magnetic thrust bearing moves along the rotational axis, the air gap remains substantially constant.

The magnetic bearing rotor and the magnetic bearing stator may be arranged in a repulsive configuration such that the air gap is defined between the magnetic bearing rotor and the magnetic bearing stator. Alternatively, the magnetic bearing rotor and the magnetic bearing stator may be arranged in an attractive configuration such that the air gap is defined between the magnetic bearing rotor and the magnetic bearing stator.

Since the stiffness of the resilient support structure is lower than the stiffness of the magnetic thrust bearing, a small air gap can be maintained for the magnetic thrust bearing with a reduced risk of collision between the magnetic bearing rotor and the magnetic bearing stator even when the magnetic thrust bearing is subjected to high axial vibrations. Thus, with the arrangement according to the present disclosure, the air gap can be dimensioned such that the amount of material for the magnets (e.g. permanent magnet material) is reduced.

The stiffness of the resilient support structure may be significantly lower than the stiffness of the magnetic thrust bearing. For example, the stiffness of the magnetic thrust bearing may be at least 5 times, such as at least 10 times, such as at least 20 times, such as at least 50 times, such as at least 100 times, the stiffness of the resilient support structure.

Thus, the resilient support structure is not primarily used to dampen vibrations and/or displacements along the rotational axis. Instead, the resilient support structure is designed to allow the magnetic bearing rotor to move along the rotational axis, e.g. up and down in case the rotational axis is vertically oriented. Due to the relatively low stiffness of the resilient support structure, the magnetic bearing rotor can compress and extend the resilient support structure over relatively large distances without significantly changing the air gap of the magnetic thrust bearing. The resilient support structure may thus be said to constitute a "floating support".

In case the stiffness of the resilient support structure is significantly lower than the stiffness of the magnetic thrust bearing when the magnetic bearing rotor is in a neutral position, the stiffness of the resilient support structure may still be lower than the stiffness of the magnetic thrust bearing when the magnetic thrust bearing has been displaced a relatively large distance along the rotational axis. Thereby, axial forces (along the rotational axis) acting on the magnetic thrust bearing in a compressed position or an extended position will primarily result in a compression/extension of the resilient support structure and not in a compression/extension of the magnetic thrust bearing (i.e. a change of the air gap).

The magnetic thrust bearing is configured to carry a mainly axial load, i.e. axial along the rotational axis. The axial forces acting on the magnetic thrust bearing may vary depending on the implementation. For example, in case the arrangement is implemented such that the rotational axis is vertically oriented, or substantially vertically oriented, the axial forces acting on the magnetic thrust bearing include the weight of the rotor and any rotatable body fixed thereto. Depending on the implementation, the arrangement may additionally be subjected to external axial forces acting on the magnetic thrust bearing.

In an implementation in a hydroelectric power plant, the weight of the magnetic bearing stator may for example be 100 tons, 200 tons or 300 tons. In such implementation, the magnetic thrust bearing may be subjected to extremely high external axial forces that are as large as, or larger than the gravital force of the magnetic bearing stator.

The stiffnesses of the resilient support structure and the magnetic thrust bearing depend on implementation. As one example, if the rotatable body has a weight of 100 tons, the stiffness of the magnetic thrust bearing may be between 100 to 200 kN/mm. Thus, the present disclosure provides for a stiffness of the magnetic thrust bearing according to the formula:

$$WT \leq k \leq 2*WT$$

where WT is the weight of the rotatable body in tons and k is the stiffness of the magnetic thrust bearing in kN/mm.

The arrangement may for example be configured to support the rotatable body at rotational speeds between 30 rpm and 20 000 rpm. For an implementation in a system for power generation through movement of water, the arrangement may for example be configured to support the rotatable body at rotational speeds between 50 and 500 rpm.

The magnetic bearing rotor and/or the magnetic bearing stator of the magnetic thrust bearing may be constituted by one or more rotor discs and/or stator discs, respectively. The magnetic bearing rotor may be constituted by one rotor disc and the magnetic bearing stator may be constituted by one stator disc. Alternatively, the magnetic bearing rotor may be constituted by several rotor discs and the magnetic bearing stator may be constituted by several stator discs. The rotor discs and the stator discs may be alternatingly arranged along the rotational axis. In this case, several air gaps will be defined between each pair of rotor disc and stator disc. The stiffness of the resilient support structure may then be lower than the stiffness of the magnetic thrust bearing such that each air gap remains substantially constant when the magnetic thrust bearing moves along the rotational axis.

The magnetic thrust bearing may be a passive magnetic thrust bearing. The passive magnetic thrust bearing may alternatively be referred to as a permanent magnetic thrust bearing. An arrangement according to the present disclosure comprising a passive magnetic thrust bearing is referred to as a passive arrangement.

The magnetic thrust bearing may be an electromagnetic thrust bearing. In this case, the magnetic bearing stator may comprise coils to form stator windings.

The arrangement may further comprise a rotatable body arranged to rotate relative to the stationary structure about the rotational axis, wherein the rotatable body is fixed with respect to the magnetic bearing rotor. A fixation in this sense means that the rotatable body is locked against any rotation and movement relative to the magnetic bearing rotor.

The rotatable body and the magnetic bearing rotor may be axially supported entirely or partly by the magnetic forces of the magnetic thrust bearing. The arrangement may for example comprise further bearings to axially and/or radially support the rotatable body.

The rotatable body may comprise a shaft, e.g. a rotor shaft. In this case, the magnetic bearing stator may comprise an opening through which the shaft extends. However, the rotatable body may alternatively be constituted by a component that is not a shaft.

The arrangement may further comprise a stationary structure. The stationary structure may for example be constituted by a housing or a part of a housing, e. g. a platform.

A spring constant of the resilient support structure may be lower than a spring constant of the magnetic thrust bearing. These spring constants are constant factor characteristics of the resilient support structure and the magnetic thrust bearing, respectively, during compression/extension along the rotational axis. The spring constant of the resilient support structure may be significantly lower than the spring constant of the magnetic thrust bearing. For example, the spring constant of the magnetic thrust bearing may be at least 10 times, such as at least 20 times, such as at least 50 times, such as at least 100 times, the spring constant of the resilient support structure.

If the resilient support structure has a spring constant, it is substantially linear along at least a range of compression/extension. However, the spring constant of the resilient support structure does not have to be linear.

The resilient support structure may comprise at least one spring. According to one variant, the resilient support structure comprises a spring arrangement having a plurality of springs. The plurality of springs may be arranged in a matrix in a plane substantially perpendicular to the rotational axis.

Alternatively, or in addition, the resilient support structure may comprise an elastic member, for example a bellows. The elastic member may or may not be linear, i.e. a force generated by the elastic member responsive to the compression/extension of the elastic member may or may not be proportional to the compression/extension of the elastic member.

The rotational axis may be substantially vertically oriented. In this case, the magnetic bearing rotor may be arranged vertically above the magnetic bearing stator.

The resilient support structure may be arranged vertically below the magnetic bearing stator. In this case, the resilient support structure may attached to a substantially horizontal portion of the stationary structure.

Alternatively, or in addition, the resilient support structure may be attached to one or more substantially vertical portions of the stationary structure, e.g. walls of a housing. The resilient support structure may be attached directly or indirectly to the magnetic bearing stator and the stationary structure.

The rotational axis may however alternatively be oriented in any spatial direction. For example, the rotational axis may be substantially horizontally oriented such that the magnetic bearing rotor is allowed to move along the substantially horizontal rotational axis when subjected to horizontal axial forces.

The arrangement may further comprise a damping mechanism arranged to damp movements (e. g. oscillations) of the magnetic bearing stator along the rotational axis. The damping mechanism may be configured to damp oscillations of the magnetic thrust bearing at the Eigen frequency of the oscillating structure, i.e. the magnetic thrust bearing and possible further components, such as a rotatable body in the form of a shaft. The damping mechanism may be arranged in series with, or parallel with, the resilient support structure.

The damping mechanism may comprise or be constituted by a viscous damper. The damping mechanism, e.g. the viscous damper, may be configured to provide a damping force that is proportional to the movement speed of the magnetic thrust bearing along the rotational axis.

The arrangement may be configured such that the magnetic thrust bearing can move at least 5 mm, such as at least 10 mm, up and down from a neutral position along the rotational axis while the air gap remains substantially constant. The air gap may be less than 10 mm, such as less than 8 mm.

The magnetic bearing rotor may comprise magnets arranged along a rim portion of the magnetic bearing rotor. The magnets may be arranged only along the rim portion of the magnetic bearing rotor. This arrangement may be particularly useful in a system for power generation. In this case, the rim portion of the magnetic bearing rotor may for example have an inner diameter of about 8 meters and an outer diameter of 9 to 10 meters. However, the concept of providing the magnets along the rim portion of the magnetic bearing rotor may be used in systems where the rim portion of the magnetic bearing rotor for example has an outer diameter between 2 meters and 15 meters.

According to a further aspect, there is provided a system for power generation through movement of water, the system comprising an arrangement according to the present disclosure; and a turbine fixed with respect to the magnetic bearing rotor and arranged to rotate about the rotational axis.

The system may be constituted by, or constitute a part of, a hydroelectric power plant. The system may further comprise a generator for generating electrical energy from the rotation of the rotor, or a part fixed to the rotor (e.g. a shaft). According to one variant, the system comprises a substantially vertical shaft arranged to rotate about the rotational axis, a generator at an upper portion of the shaft and a turbine at a lower portion of the shaft.

As used herein, a substantially perpendicular/parallel relationship includes a perfectly perpendicular/parallel relationship as well as deviations from a perfectly perpendicular/parallel relationship with up to 5%, such as up to 2%. Furthermore, a substantially constant relationship includes a perfectly constant relationship as well as deviations from a perfectly constant relationship with up to 5%, such as up to 2%.

Brief Description of the Drawings

Further details, advantages and aspects of the present disclosure will become apparent from the following embodiments taken in conjunction with the drawings, wherein:

Fig. 1: schematically represents a side view of an arrangement for supporting a rotatable body comprising a magnetic thrust bearing and a resilient support structure, where the arrangement is in a neutral position;

Fig. 2: schematically represents a side view of the arrangement in a compressed position;

Fig. 3: schematically represents a side view of the arrangement in an extended position; and

Fig. 4: schematically represents a side view of a system comprising the arrangement.

**Detailed Description**

In the following, an arrangement for supporting a rotatable body comprising a magnetic thrust bearing, and a system comprising such arrangement, will be described. The same reference numerals will be used to denote the same or similar structural features.

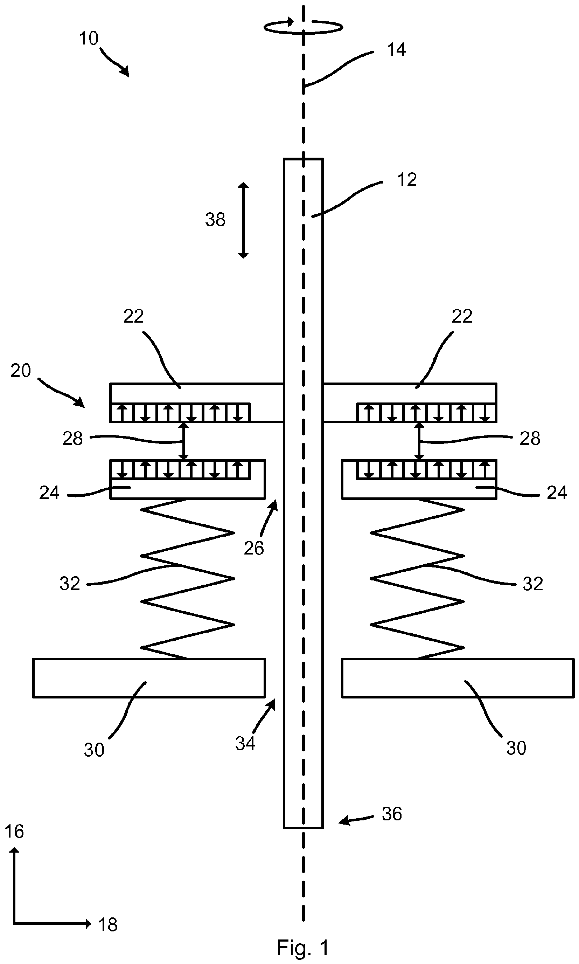

Fig. 1 schematically represents a side view of an arrangement 10 for supporting a rotatable body 12. The rotatable body 12 is here implemented as a vertically oriented shaft arranged to rotate about a rotational axis 14. The arrangement 10 of this example comprises the rotatable body 12. A vertical direction 16 and a horizontal direction 18 are indicated in Fig. 1.

The arrangement 10 comprises a magnetic thrust bearing 20 arranged to mainly carry loads along the rotational axis 14. In this example, the magnetic thrust bearing 20 is a passive magnetic thrust bearing.

The magnetic thrust bearing 20 comprises a magnetic bearing rotor 22 implemented as a rotor disc and a magnetic bearing stator 24 implemented as a stator disc. The magnetic bearing rotor 22 is arranged vertically above the magnetic bearing stator 24. The magnetic bearing stator 24 comprises an opening 26 substantially coincident with the rotational axis 14 and through which the rotatable body 12 extends.

Each of the magnetic bearing rotor 22 and the magnetic bearing stator 24 comprises a plurality of permanent magnets arranged to repel each other substantially along the rotational axis 14. The magnetic bearing rotor 22 and the magnetic bearing stator 24 are thereby arranged in a repulsive configuration. As can be seen in Fig. 1, the magnetic bearing rotor 22 and the magnetic bearing stator 24 are slightly spaced from each other along the rotational axis such that an air gap 28 is defined between the magnetic bearing rotor 22 and the magnetic bearing stator 24.

The magnets may be arranged in various different structures, for example in a Halbach structure. A typical magnetic size is a 4 cm cube.

Furthermore, Fig. 1 illustrates the magnets as arranged along over half the radial distance of the magnetic bearing rotor 22 and the magnetic bearing stator 24. However, at least the magnets of the magnetic bearing rotor 22, and optionally also the magnets of the magnetic bearing stator 24, may comprise magnets arranged along a rim portion of the magnetic bearing rotor 22 (and a rim portion of the magnetic bearing stator 24).

The rotatable body 12 is fixed to the magnetic bearing rotor 22. The rotatable body 12 and the magnetic bearing rotor 22 are thereby arranged to rotate relative to the magnetic bearing stator 24 about the rotational axis 14. The arrangement 10 may comprise further bearings (not shown), for example radial bearings, such as journal bearings, to support the rotatable body 12.

Fig. 1 further illustrates a stationary structure 30 constituted by a substantially horizontal platform to support the arrangement 10. The arrangement 10 further comprises a resilient support structure 32 for supporting the magnetic bearing stator 24 relative to the stationary structure 30. The stationary structure 30 further comprises an opening 34 through which the rotatable body 12 extends in the position of Fig. 1. In this exemplifying implementation, a turbine (not shown) may be attached to a lower end 36 of the rotatable body 12 to rotationally drive the rotatable body 12 about the rotational axis 14 by means of flowing water.

In this example, where the rotatable body 12 is implemented as a vertically oriented shaft, the resilient support structure 32 is arranged below the magnetic bearing stator 24. However, the resilient support structure 32 may adopt various different configurations in order to support the magnetic bearing stator 24 relative to the stationary structure 30 for allowing the magnetic thrust bearing 20 to move along the rotational axis 14 and does not have to be arranged below the magnetic bearing stator 24.

The resilient support structure 32 is here constituted by a plurality of springs. The springs of the resilient support structure 32 are arranged as a bed or matrix on the stationary structure 30 to circumferentially enclose the rotatable body 12 about the rotational axis 14. The resilient support structure 32 of this example is linear, i. e. the force generated by the resilient support structure 32 responsive to the compression/extension of the resilient support structure 32 is substantially proportional to the compression/extension of the resilient support structure 32.

The resilient support structure 32 is attached to the magnetic bearing stator 24 and to the stationary structure 30. The rotatable body 12 and the magnetic bearing rotor 22 are thereby arranged to rotate also relative to the magnetic bearing stator 24 about the rotational axis 14.

In Fig. 1, the arrangement 10 is in a neutral position. The neutral position is an equilibrium position reached by the magnetic bearing rotor 22 when there are no external axial forces or when a constant external axial force is applied. In the case of no external axial forces, the resilient support structure 32 is compressed to some degree in the neutral position due to the weight of the rotatable body 12 and the magnetic thrust bearing 20.

Each of the magnetic thrust bearing 20 and the resilient support structure 32 has a certain stiffness. The resilient support structure 32 has a low stiffness. Thereby, the resilient support structure 32 allows the magnetic thrust bearing 20 (with a constant air gap 28) to move up and down along the rotational axis 14, as indicated by arrows 38. The resilient support structure 32 is not primarily used to dampen axial vibrations.

The stiffness of the magnetic thrust bearing 20 is significantly higher than the stiffness of the resilient support structure 32, for example at least 5 times higher. Therefore, if an axial force (external, gravital or otherwise generated) is applied to the rotatable body 12 or on the magnetic bearing rotor 22, the force will mainly be absorbed by the resilient support structure 32 and not by a change of the air gap 28 of the magnetic thrust bearing 20. As a consequence, the axial force will cause the rotatable body 12 and the magnetic thrust bearing 20 to move or "float" in the corresponding direction 38 along the rotational axis 14 while the air gap 28 is maintained substantially constant. The risk of collision between the magnetic bearing rotor 22 and the magnetic bearing stator 24 will thereby be reduced and a smaller air gap 28 may therefore be used. The rotatable body 12 may be supported in the radial direction (horizontal direction 18 in case the rotational axis 14 is vertically oriented) by one or more of the further bearings (not shown), such as journal bearings.

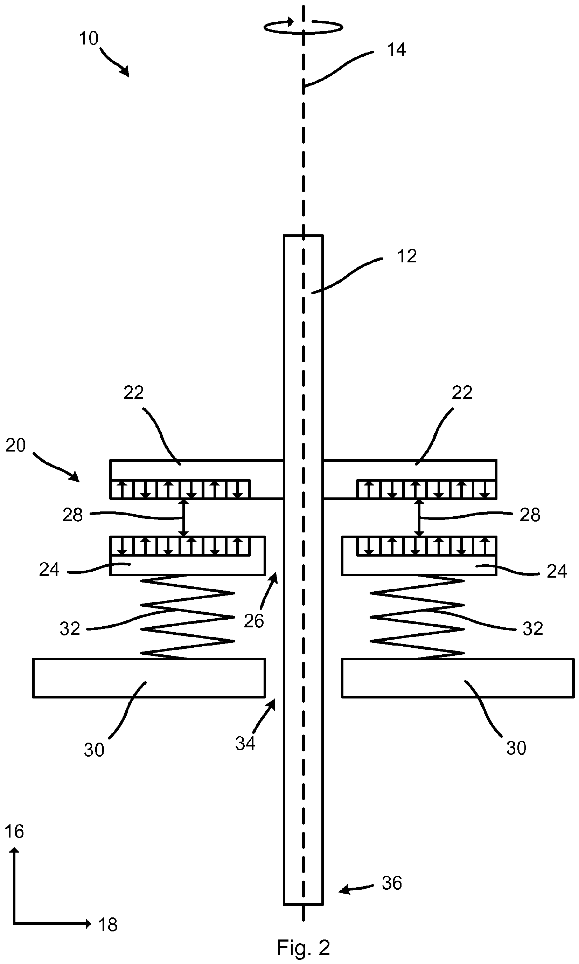

Fig. 2 schematically represents a side view of the arrangement 10 in a compressed position. The magnetic thrust bearing 20 and the rotatable body 12 have been moved downwards approximately 10 mm due to an external axial force. Since the stiffness of the resilient support structure 32 is significantly lower than the stiffness of the magnetic thrust bearing 20, the energy from the external axial force is stored mechanically as a compression of the resilient support structure 32 and not by a change of the air gap 28 of the magnetic thrust bearing 20.

Furthermore, by dimensioning the stiffness of the resilient support structure 32 low enough and the stiffness of the magnetic thrust bearing 20 high enough, the stiffness of the resilient support structure 32 is still lower than the stiffness of the magnetic thrust bearing 20 in the compressed position of Fig. 2, i.e. when the rotatable body 12 has moved downwards a relatively large distance, the resilient support structure 32 has been compressed and the magnetic thrust bearing 20 has not been compressed (i.e. the air gap 28 is substantially unchanged). Thereby, further axial oscillations acting on the rotatable body 12 in the compressed position of Fig. 2 can also be absorbed by the resilient support structure 32, and not by the magnetic thrust bearing 20.

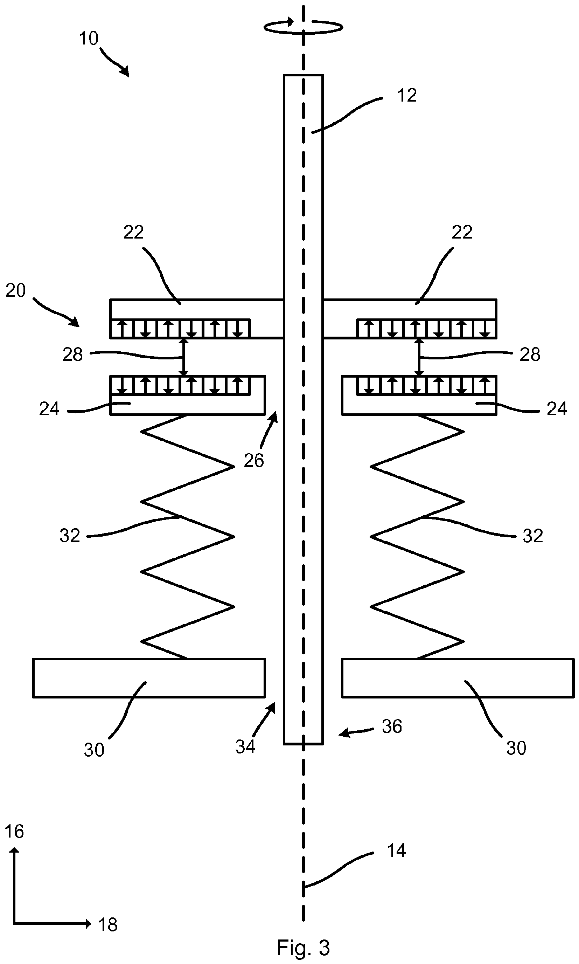

Fig. 3 schematically represents a side view of the arrangement 10 in an extended position. The magnetic thrust bearing 20 and the rotatable body 12 have been moved upwards approximately 10 mm. The extended position could be the result of axial oscillations along the rotational axis 14. Alternatively, the extended position could be a "released position" when a substantially constant downward axial force, that acts on the magnetic bearing rotor 22 during operation (so that the arrangement 10 adopts the neutral position during operation), has been released.

In the extended position of Fig. 3, the upward movement of the magnetic thrust bearing 20 and the rotatable body 12 is mainly absorbed by extending the resilient support structure 32, and not by changing the air gap 28 of the magnetic thrust bearing 20. Thus, the air gap 28 is substantially unchanged, as compared with the neutral position of Fig. 1.

Due to the low stiffness of the resilient support structure 32 and the high stiffness of the magnetic thrust bearing 20, the stiffness of the resilient support structure 32 is still lower than the stiffness of the magnetic thrust bearing 20 in the extended position of Fig. 3, i.e. when the rotatable body 12 has moved upwards a relatively large distance, the resilient support structure 32 has been extended and the magnetic thrust bearing 20 has not been compressed (i.e. the air gap 28 is substantially unchanged). Thereby, further axial oscillations acting on the rotatable body 12 in the extended position of Fig. 3 can also be absorbed by the resilient support structure 32, and not by the magnetic thrust bearing 20.

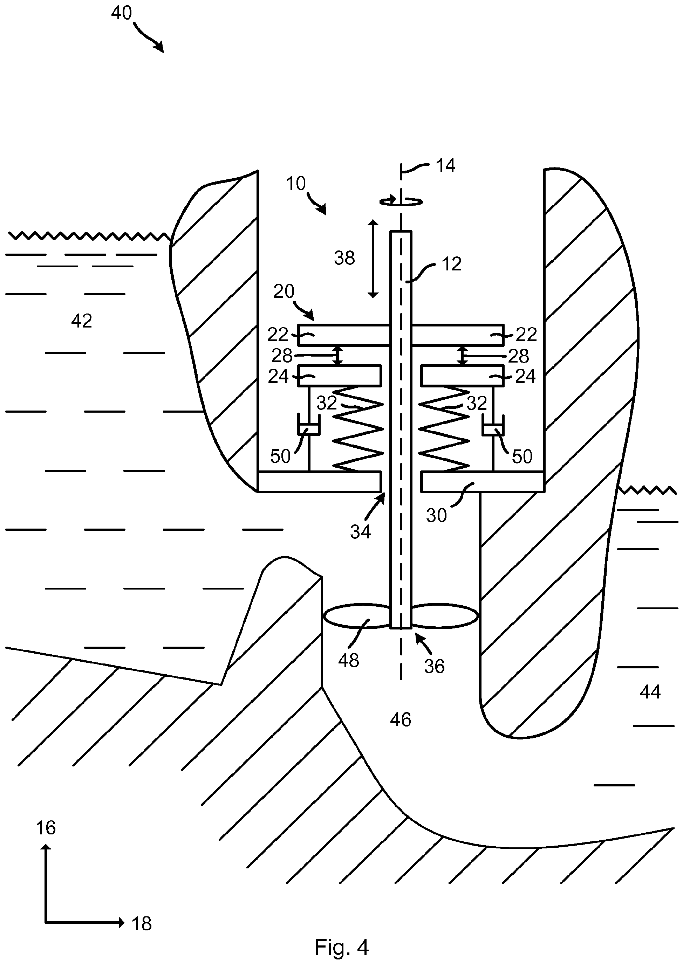

Fig. 4 schematically represents a side view of a system 40 comprising the arrangement 10. The system 40 may comprise only one arrangement 10 or several arrangements 10.

The system 40 in this example is a system for power generation through movement of water. More specifically, the system 40 is constituted by a hydroelectric power plant where water is guided from a vertically higher headwater reservoir 42 to a vertically lower tailwater reservoir 44 through a passage 46. A turbine 48 is attached to the lower end 36 of the rotatable body 12. When the water flows through the passage 46, the turbine 48 rotates together with the rotatable body 12 about the rotational axis 14 to drive a generator (not shown).

In the hydroelectric power plant implementation of Fig. 4, the weight of the magnetic bearing stator 24 may be over 100 tons. The magnetic thrust bearing 20 is subjected to extremely high external axial forces, e.g. higher than the gravital forces of the rotatable body 12 and the magnetic thrust bearing 20. Despite this, an air gap 28 of less than 8 mm can be used in the magnetic thrust bearing 20 since the axial forces acting on the rotatable body 12 are absorbed by the resilient support structure 32 and not by the magnetic thrust bearing 20. In addition, the risk for collision between the magnetic bearing rotor 22 and the magnetic bearing stator 24 can be reduced.

The arrangement 10 of Fig. 4 further comprises a damping mechanism 50. The damping mechanism 50 is here implemented as two viscous dampers connected to the magnetic bearing stator 24 and the stationary structure 30. The resilient support structure 32 and the damping mechanism 50 are connected in parallel between the magnetic bearing stator 24 and the stationary structure 30.

The damping mechanism 50 provides a damping force that is proportional to the movement speed of the magnetic thrust bearing 20 along the rotational axis 14. The damping mechanism 50 is thereby arranged to damp axial oscillations of the magnetic bearing stator 24.

While the present disclosure has been described with reference to exemplary embodiments, it will be appreciated that the present invention is not limited to what has been described above. For example, it will be appreciated that the dimensions of the parts may be varied as needed. Accordingly, it is intended that the present invention may be limited only by the scope of the claims appended hereto.

**Claims**

1. Arrangement (10) for supporting a rotatable body (12), the arrangement (10) comprising:

   - a magnetic thrust bearing (20) having a magnetic bearing rotor (22) and a magnetic bearing stator (24) arranged in a configuration such that an air gap (28) is defined between the magnetic bearing rotor (22) and the magnetic bearing stator (24), the magnetic bearing rotor (22) being arranged to rotate relative to a stationary structure (30) about a rotational axis (14); and
   - a resilient support structure (32) for supporting the magnetic bearing stator (24) relative to the stationary structure (30) and for allowing the magnetic thrust bearing (20) to move along the rotational axis (14);

   wherein a stiffness of the resilient support structure (32) is lower than a stiffness of the magnetic thrust bearing (20) such that when the magnetic thrust bearing (20) moves along the rotational axis (14), the air gap (28) remains substantially constant.

2. The arrangement (10) according to claim 1, wherein the magnetic bearing rotor (22) and the magnetic bearing stator (24) are arranged in a repulsive configuration such that the air gap (28) is defined between the magnetic bearing rotor (22) and the magnetic bearing stator (24).

3. The arrangement (10) according to claim 1 or 2, wherein the magnetic thrust bearing (20) is a passive magnetic thrust bearing.

4. The arrangement (10) according to claim 1 or 2, wherein the magnetic thrust bearing (20) is an electromagnetic thrust bearing.

5. The arrangement (10) according to any of the preceding claims, further comprising a rotatable body (12) arranged to rotate relative to the stationary structure (30) about the rotational axis (14), wherein the rotatable body (12) is fixed with respect to the magnetic bearing rotor (22).

6. The arrangement (10) according to any of the preceding claims, further comprising a stationary structure (30).

7. The arrangement (10) according to any of the preceding claims, wherein a spring constant of the resilient support structure (32) is lower than a spring constant of the magnetic thrust bearing (20).

8. The arrangement (10) according to any of the preceding claims, wherein the resilient support structure (32) comprises at least one spring.

9. The arrangement (10) according to any of the preceding claims, wherein the rotational axis (14) is substantially vertically oriented.

10. The arrangement (10) according to claim 9, wherein the magnetic bearing rotor (22) is arranged vertically above the magnetic bearing stator (24).

11. The arrangement (10) according to any of the preceding claims, further comprising a damping mechanism (50) arranged to damp movements of the magnetic bearing stator (24) along the rotational axis (14).

12. The arrangement (10) according to any of the preceding claims, wherein the arrangement (10) is configured such that the magnetic thrust bearing (20) can move at least 5 mm, such as at least 10 mm, up and down from an equilibrium position along the rotational axis (14) while the air gap (28) remains substantially constant.

13. The arrangement (10) according to any of the preceding claims, wherein the air gap (28) is less than 10 mm, such as less than 8 mm.

14. The arrangement (10) according to any of the preceding claims, wherein the magnetic bearing rotor (22) comprises magnets arranged along a rim portion of the magnetic bearing rotor (22).

15. System (40) for power generation through movement of water, the system (40) comprising:

- an arrangement (10) according to any of the preceding claims; and
- a turbine (48) fixed with respect to the magnetic bearing rotor (22) and arranged to rotate about the rotational axis (14).

Fig. 1

Fig. 2

Fig. 3

Fig. 4

Europäisches
Patentamt

European
Patent Office

Office européen
des brevets

# EUROPEAN SEARCH REPORT

Application Number

EP 16 19 6073

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S60 8516 U (N.N.) 21 January 1985 (1985-01-21) | 1-3, 5-10,14 | INV. F16C32/04 |
| Y | * figures 3-6 * | 15 | F16C27/08 |
| X | US 5 521 448 A (TECZA JOSEPH A [US] ET AL) 28 May 1996 (1996-05-28) * the whole document * | 1,2,11 | ADD. F03B11/06 |
| A | US 3 731 984 A (HABERMANN H) 8 May 1973 (1973-05-08) * the whole document * | 4 | |
| Y | DE 10 16 068 B (SIEMENS AG) 19 September 1957 (1957-09-19) * the whole document * | 15 | |
| A | US 2014/111047 A1 (HASHISH EMAM [US] ET AL) 24 April 2014 (2014-04-24) * paragraph [0031]; figure 4 * | 1-3,5-10 | |

TECHNICAL FIELDS
SEARCHED      (IPC)

F16C
F03B

The present search report has been drawn up for all claims

| Place of search | Date of completion of the search | Examiner |
|---|---|---|
| Munich | 7 July 2017 | De Jongh, Cornelis |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 16 19 6073

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2017

| Patent document cited in search report | | Publication date | Patent family member(s) | | Publication date |
|---|---|---|---|---|---|
| JP S608516 | U | 21-01-1985 | JP<br>JP | S608516 U<br>S632661 Y2 | 21-01-1985<br>22-01-1988 |
| US 5521448 | A | 28-05-1996 | NONE | | |
| US 3731984 | A | 08-05-1973 | DE<br>FR<br>GB<br>US | 2151916 A1<br>2110581 A5<br>1370666 A<br>3731984 A | 27-04-1972<br>02-06-1972<br>16-10-1974<br>08-05-1973 |
| DE 1016068 | B | 19-09-1957 | NONE | | |
| US 2014111047 | A1 | 24-04-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. NAKATA.** Magnetic thrust bearing. *Fuji Denki Review,* 1958, vol. 4 (2